# EUROPEAN PATENT SPECIFICATION

(11) **EP 0 925 526 B1**
(45) Date of publication and mention of the grant of the patent: **17.05.2006**
(21) Application number: 98919443.6
(22) Date of filing: 29.05.1998
(51) Int. Cl.: G02F 1/1335, G02B 27/28

(54) **PROJECTION DEVICE**
PROJEKTIONSGERÄT
APPAREIL DE PROJECTION

(30) Priority: 16.06.1997 EP 97201795
(43) Date of publication of application: 30.06.1999
(73) Proprietor: Koninklijke Philips Electronics N.V., 5621 BA Eindhoven (NL)
(72) Inventor: CNOSSEN, Gerard, NL-5656 AA Eindhoven (NL); STALLINGA, Sjoerd, NL-5656 AA Eindhoven (NL); MELNIK, George, A., NL-5656 AA Eindhoven (NL)
(74) Representative: van der Veer, Johannis Leendert
(86) International application number: PCT/IB1998/000834
(87) International publication number: WO 1998/058291

(56) References cited:
- EP-A- 0 535 725
- EP-A- 0 573 905
- US-A- 5 490 003
- US-A- 5 490 006
- US-A- 5 570 215

## Description

The invention relates to a projection device comprising a light source, a reflective liquid crystal display device with a layer of liquid crystalline material between a first and a second substrate which are provided with orientation means defining a twist angle φ for the molecules of the liquid crystalline material, means for guiding light from the light source to the first substrate, the second substrate being provided with means for reflecting light passing the layer of liquid crystalline material, said projection device further comprising polarizing means in the light path between the light source and the first substrate and analyzing means in the light path, after reflection, between the liquid crystal display device and a display plane.

These types of projection devices are used in, for example projection television but also in "head-mounted displays". In the latter case, the display plane is the retina.

A projection device of the type mentioned above is described in US patent 5,490,003. Said patent describes how a high contrast is obtained at a small residual transmission in the dark state, while grey-scale inversion is also avoided. To achieve this, stringent requirements are imposed on the orientation directions of the orientation means with respect to the direction of polarization of the polarizing means (the direction of polarization is along the direction of the dividing line between these orientation directions). Moreover, only a small range of twist angles (of between 50 and 68 degrees) can be used for a good contrast, while the product (d.Δn) of the thickness d of the layer of liquid crystal material and the birefringence Δn of the liquid crystal material require a limitation to a value of between 0.58.λ₀ and 0.68.λ₀, in which λ₀ is a central wavelength.

As described in said patent, the difference in optical path length difference, after reflection, between the ordinary and the extraordinary wave is approximately 0.5.λ₀ for two extreme transmission states; the reflective liquid crystal display device thus functions as a quarter-lambda plate. The actual product (d.Δn) is, however, between 0.58.λ₀ and 0.68.λ₀ and therefore leads to a high value of the thickness d (at a constant Δn). This thickness d directly defines the switching speed (which is proportional to 1/d²); notably for "sequential color" projection applications, it is too slow. The described effect requires a high drive voltage. Notably when using a semiconductor substrate, in which drive electronics are realized in the substrate, this voltage should not be too high.

Moreover, the device described is exclusively suitable for use in the "normally white" mode. In the non-driven state, not only the picture electrodes reflec light but also the (semiconductor) material situated between and around the picture electrodes, so that extra steps are required to render this interpositioned material invisible.

The features of the preamble of claim 1 are known from this document.

It is, inter alia, an object of the invention to provide a projection device in which the above-mentioned drawbacks are obviated as much as possible. For example, it is an object of the invention to provide a projection device of the type described above which can operate at low drive voltages. It is a further object of the invention to provide such a device which is rapid enough for, for example "sequential color" projection applications.

To this end, a projection device according to the invention is characterized in that the twist angle φ has a value of between 30 and 55 degrees, and the liquid crystal display device is provided with a retardation foil.

The invention is based on the recognition that, due to the use of a retardation foil, the drive voltage can be reduced within said twist angle range with respect to that in the known projection device. The "residual transmission" in a fully driven display element (opaque in this case) is now compensated by the retardation value of the retardation foil (for example, 20-150 nanometers). Since a part of the residual transmission is compensated in this state, the product (d.Δn) of the thickness d of the layer of liquid crystal material and the birefringence Δn of the liquid crystal material can be chosen to be smaller, dependent on the retardation value of the retardation foil. Notably, a smaller thickness d can be chosen, so that the device switches more rapidly. The retardation of the retardation foil also has its influence on the non-driven state (the brightness decreases). It appears that this is obviated by choosing a value of between 30 and 55 degrees for the twist angle, preferably approximately 45 degrees. The use of the retardation foil also provides the possibility of using lower drive voltages.

By choosing the orientation direction of the liquid crystal molecules on the side of the polarizing means to be substantially parallel to the direction of polarization of the direction of polarization defined by the polarizing means, or by choosing this orientation direction to be perpendicular to the direction of polarization, it is only necessary to compensate for birefringence on the side of the reflecting means.

Also the angle γ between the optical axis of the retardation foil and the orientation direction of the orientation means at the area of the first substrate now does not need to have a fixed value, as in the known device, but may vary between, for example (80 + φ/2) degrees and (100 + φ) degrees.

These and other aspects of the invention are apparent from and will be elucidated with reference to the embodiments described hereinafter.

In the drawings:
Fig. 1 shows diagrammatically a part of a projection display device according to the invention,
Fig. 2 shows the mutual relationship between rubbing directions, polarization axes and the optical axis of the retardation foil,
Fig. 3 shows the maximum intensity of the reflected light as a function of the twist angle φ,
Fig. 4 shows the desired retardation of the retardation foil for reaching the maximum intensity of the reflected light, as a function of the twist angle φ, while
Fig. 5 shows some voltage-reflection curves, and
Fig. 6 shows the desired retardation of the retardation foil for reaching the maximum intensity of the reflected light, as a function of the twist angle φ, for another device according to the invention.

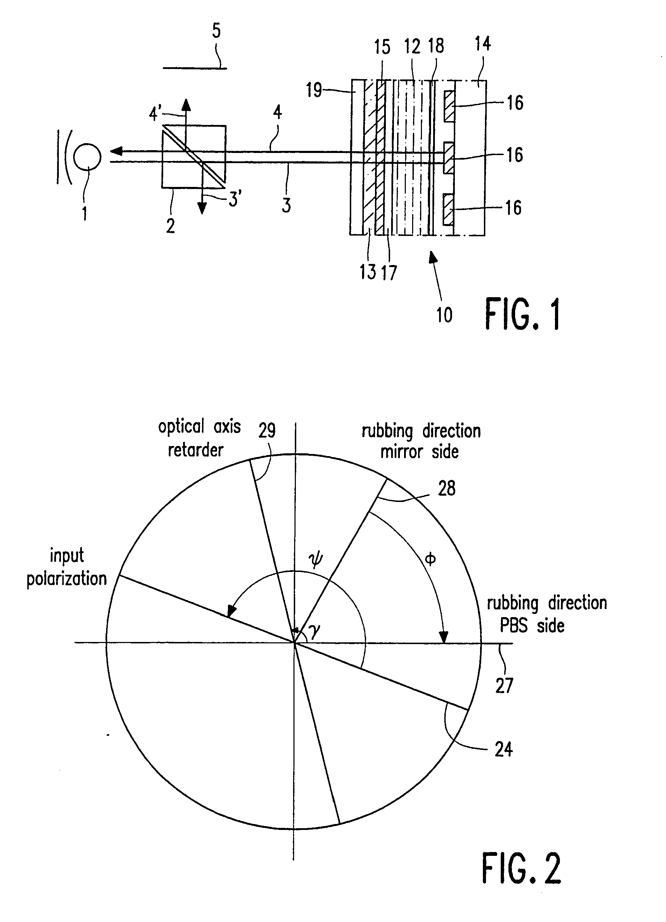

The projection device shown diagrammatically in Fig. 1 comprises a lamp 1, a polarizing beam splitter (PBS) 2, a reflective liquid crystal cell (LCD) and a display screen 5. Light emitted by the lamp 1 is split by the PBS 2 into a beam 3 of horizontally polarized light and a beam 3' of vertically polarized light. The beam 3 reaches the reflective LCD 10 and is reflected thereon. Dependent on the state of the separate pixels in the LCD 10, the reflected beam 4 comprises horizontally and vertically polarized light. The PBS 2 splits up the beam 4 into a horizontally and a vertically polarized light beam. The vertically polarized light beam 4' reaches the display screen 5. Further optical elements and drive units are omitted in Fig. 1 for the sake of simplicity.

Fig. 1 shows a further diagrammatic cross-section of a part of a liquid crystal cell (LCD) 10 with a twisted-nematic liquid crystal material 12 which is present between two substrates 13, 14 provided with the electrodes 15, 16. The device further comprises orientation layers 17, 18 which orient the liquid crystal material on the inner walls of the substrates in such a way that the cell has a twist angle φ. In this case, the liquid crystal material has a positive optical anisotropy and a positive dielectric anisotropy. If the electrodes 15, 16 are energized by means of an electric (drive) voltage, the molecules, and hence the directors, direct themselves to the field.

The first substrate 13 is light-transmissive (glass or quartz) and is provided with a light-transmissive drive electrode 15 of, for example indium tin oxide. In this case, the second substrate 14 consists of a silicon substrate in which drive electronics are realized by means of semiconductor techniques. The electronics are adapted in such a way that separate pixels 16 can be driven. The (mirroring) picture electrodes 16 substantially completely cover the semiconductor body, at least in the picture-defining part.

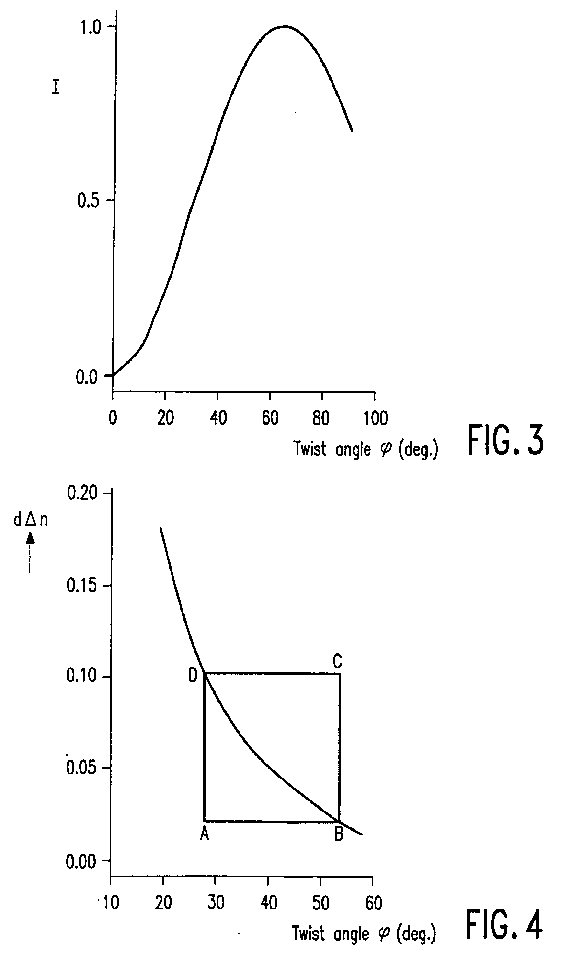

Fig. 3 shows the maximum intensity I of the reflected light as a function of the twist angle φ, in this case for an angle ψ of zero degrees between the direction 24 of polarization of the incident polarized light 3 and the rubbing direction 27 of orientation layer 17 (see Fig. 3). For other angles ψ, there is a practically identical dependence as in, for example the device described in USP 5,490,003 in which the direction of polarization is chosen along the dividing line of the angle defined by the rubbing direction 28 of orientation layer 18 and the rubbing direction 27 of orientation layer 17.

The choice ψ = 0 is very favorable because then there is no birefringence on the side of the incident light (on the orientation layer 17) and only due to possible birefringence effects at the area of the reflective substrate 14 (on the orientation layer 18), full quenching is avoided. This also applies to an angle ψ = 90°. In practice, the angle ψ may vary in both cases between -15 degrees and + 15 degrees, and between 75 degrees and 105 degrees, respectively.

To compensate for said birefringence effects, the display cell 10 comprises a retardation foil 19 whose optical axis 29, situated in a plane parallel to the substrate 13, is chosen to be parallel to the rubbing direction 27 as well. A low value is now sufficient for the retardation of the retardation foil 19, which leads to a higher contrast, while the compensation also has a low temperature sensitivity.

This form of compensation is particularly suitable for twist angles in a range between 30 and 55 degrees (and preferably between 40 and 50 degrees). For larger twist angles, the combination of liquid crystal layer and retardation foil has such a thickness (and birefringence) that it no longer functions as a quarter-lambda plate. Moreover, larger twist angles require larger voltages for untwisting the helix structure formed by the liquid crystal molecules. Higher drive voltages usually prevent the use of silicon substrates because the drive electronics cannot be realized therein unless a "high voltage" technology is used, which is considerably more expensive.

For twist angles of less than 30 degrees, similar objections apply (be it to a slightly lesser extent) as for the ECB effect (twist angle zero degrees), namely a larger sensitivity to variations in the cell thickness and a high temperature sensitivity; high temperatures occur notably in projection applications.

At a twist angle of zero degrees, the retardation foil 19 appears to have a considerable retardation value, whereas it appears to decrease considerably rapidly at twist angles from approximately 30 degrees. Fig. 4 shows the relationship between the retardation value of the retardation foil 19 and the twist angle at which maximum reflection occurs. The angle γ between the rubbing direction 27 and the direction of the optical axis 29 of the retardation foil 19 was (90 + φ) degrees (the optical axis 29 is thus chosen to be perpendicular to the rubbing direction 27), but for other values of γ, a similar relationship between the twist angle and the retardation value of the retardation foil is found. The most optimal reflectivity (for all twist angles), at which, moreover, there is the smallest wavelength dependence, is obtained by choosing substantially (90 + φ/2) degrees for the angle γ.

More generally, it appears that, dependent on the chosen maximum drive voltage, the rectangle ABCD in Fig. 4 defines an area in which the residual transmission can almost always be eliminated for a given twist angle (between 30 and 55 degrees) by choosing an associated retardation value of the retardation foil 19 (20-100 nm and preferably 40-80 nm). This ensures an optimum contrast. By subsequently choosing the angle γ, for example (90 + φ/2) degrees, a combination of maximum reflection and maximum contrast is obtained.

As described in the opening paragraph, a smaller d.Δn value of the liquid crystal layer can now be chosen. In the examples described, d.Δn (LC layer) is between 150 nm and 300 nm, i.e. between 0.27λ₀ and 0.54λ₀ (λ₀ = 550 nm) and preferably between 180 and 250 nm.

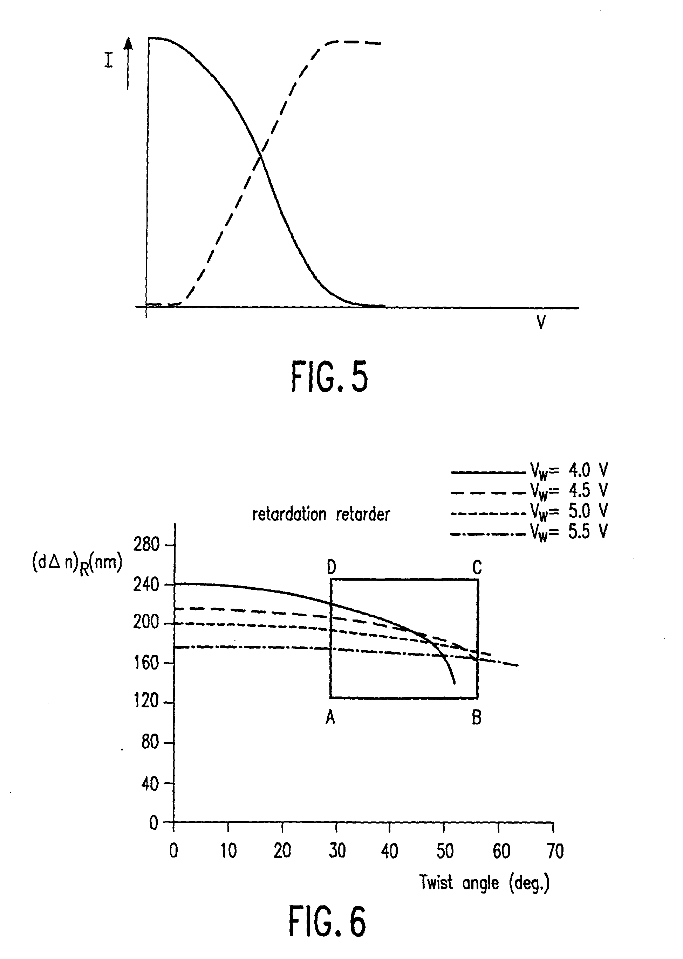

Fig. 5 shows the dependence of the intensity I of the reflected beam (solid-line curve) as a function of the applied high voltage. In this example, the retardation foil 9 has a retardation value of approximately 60 nm.

However, the device described operates in the "normally white" mode. This means that at higher voltages on the electrodes, the areas situated between the electrodes do not reflect. However, these areas and also other non-switching areas do reflect light at a zero voltage. Then precautions will have to be taken to render these areas (and, for example, electronics integrated along the edge of the picture section) invisible, for example by covering them with black chromium. This requires an extra masking step while it is also difficult to couple the two substrates.

At the same values of the twist angle (30-55 degrees) and the angle γ as chosen above, full quenching can now be obtained in the voltageless state by suitable choice of the angle ψ between the direction of orientation of the liquid crystal molecules on the side of the polarizing means and the direction of polarization determined by the polarizing means.

The angle ψ may now be in the range between -20 degrees and 30 degrees or in the range between 70 degrees and 120 degrees. Fig. 6 shows an area (rectangle ABCD) in which the most optimal reflectivity (for all twist angles) is obtained for a given twist angle (between 30 and 55 degrees) at a defined low drive voltage V_{w} by choosing an associated retardation value of the retardation foil 19 (150-250 nm, preferably 160-210 nm). As a result, a combination of maximum reflection and maximum contrast is obtained in a "normally black" display device. The associated dependence of the intensity I of the reflected beam 4 as a function of the applied drive voltage is shown by means of a broken line in Fig. 5. Precautions to be taken for rendering areas invisible (and, for example ICs which reflect in a "normally white" device) are not necessary in this case.

In summary, the invention relates to a projection device based on a reflective LCD display, in which the use of a retardation foil leads to a greater brightness and more contrast, both in a "normally black" and a "normally white" display device.

## Claims

1. A projection device comprising a light source, a reflective liquid crystal display device with a layer of liquid crystalline material between a first and a second substrate which are provided with orientation means defining a twist angle φ for the molecules of the liquid crystalline material, means for guiding light from the light source to the first substrate, the second substrate being provided with means for reflecting light passing the layer of liquid crystalline material, said projection device further comprising polarizing means in the light path between the light source and the first substrate and analyzing means in the light path, after reflection, between the liquid crystal display device and a display plane, **characterized in that** the twist angle φ has a value of between 30 and 55 degrees, and the liquid crystal display device is provided with a retardation foil.

2. A projection device as claimed in claim 1, **characterized in that** the angle between the direction of orientation of the liquid crystal molecules on the side of the polarizing means and the direction of polarization defined by the polarizing means is situated in one of the ranges (-15°-+15°) or (75°-105°).

3. A projection device as claimed in claim 1 or 2, **characterized in that** the retardation foil has an optical axis in a plane parallel to the first substrate and the angle γ between the optical axis of the retardation foil and the direction of orientation of the orientation means at the area of the first substrate has a value of at least (80 + φ/2) degrees and at most (100 + φ) degrees.

4. A projection device as claimed in claim 3, **characterized in that** the angle γ is substantially (90 + φ/2) degrees.

5. A projection device as claimed in claim 3, **characterized in that** the angle γ is substantially (90 + φ) degrees.

6. A projection device as claimed in claim 1 or 3, **characterized in that** the retardation foil has a retardation value of 20-100 nanometers.

7. A projection device as claimed in claim 1 or 3, **characterized in that** the angle between the direction of orientation of the liquid crystal molecules on the side of the polarizing means and the direction of polarization defined by the polarizing means is situated in one of the ranges (-20°-+30°) or (60°-100°).

8. A projection device as claimed in claim 7, **characterized in that** the retardation foil has a retardation value of 150-250 nanometers.

## Patentansprüche

1. Projektionsgerät mit einer Lichtquelle, einer reflektierenden Flüssigkristall-Wiedergabeanordnung mit einer Schicht aus flüssigkristallinem Material zwischen einem ersten und einem zweiten Substrat, die mit Ausrichtmitteln versehen sind, die einen Drallwinkel φ für die Moleküle des flüssigkristallinen Materials definieren, mit Mitteln zum Leiten von Licht von der Lichtquelle zu dem ersten Substrat, wobei das zweite Substrat mit Mitteln versehen ist zum Reflektieren von Licht, das durch die Schicht aus flüssigkristallinem Material hindurch geht, wobei das genannte Projektionsgerät weiterhin Polarisationsmittel in dem Lichtweg zwischen der Lichtquelle und dem ersten Substrat aufweist, sowie Analysiermittel in dem Lichtweg, nach Reflexion, zwischen der Flüssigkristall-Wiedergabeanordnung und einer Wiedergabeebene, **dadurch gekennzeichnet, dass** der Drallwinkel φ einen Wert zwischen 30 und 55 Grad hat, und die Flüssigkristall-Wiedergabeanordnung mit einer Verzögerungsfolie versehen ist.

2. Projektionsgerät nach Anspruch 1, **dadurch gekennzeichnet, dass** der Winkel zwischen der Richtung der Ausrichtung der Flüssigkristall-Moleküle an der Seite der Polarisierungsmittel und der von den Polarisierungsmitteln definierten Polarisationsrichtung in einem der Bereiche (-15° bis +15°) oder 75G bis 105°) liegt.

3. Projektionsgerät nach Anspruch 1 oder 2, **dadurch gekennzeichnet, dass** die Verzögerungsfolie eine optische Achse in einer Ebene parallel zu dem ersten Substrat hat und dass der Winkel γ zwischen der optischen Achse der Verzögerungsfolie und der Orientierungsrichtung der Orientierungsmittel in dem Bereich des ersten Substrats einen Wert von wenigstens (80 + φ/2) Grad und höchstens (100 + φ) Grad hat.

4. Projektionsgerät nach Anspruch 3, **dadurch gekennzeichnet, dass** der Winkel γ im Wesentlichen (90 + φ/2) Grad beträgt.

5. Projektionsgerät nach Anspruch 3, **dadurch gekennzeichnet, dass** der Winkel γ im Wesentlichen (90 + φ) Grad beträgt.

6. Projektionsgerät nach Anspruch 1 oder 3, **dadurch gekennzeichnet, dass** die Verzögerungsfolie einen verzögerungswert von 20-100 nm hat.

7. Projektionsgerät nach Anspruch 1 oder 3, **dadurch gekennzeichnet, dass** der Winkel zwischen der Orientierungsrichtung der flüssigkristallinen Moleküle an der Seite der Polarisierungsmittel und der durch die Polarisierungsmittel definierten Polarisationsrichtung in einem der Bereiche von (-20° bis +30°) oder 60° bis 100°) liegt.

8. Projektionsgerät nach Anspruch 7, **dadurch gekennzeichnet, dass** die Verzögerungsfolie einen Verzögerungswert von 150 - 250 nm hat.

## Revendications

1. Dispositif de projection comprenant une source de lumière, un dispositif d'affichage à cristaux liquides réflectif présentant une couche en un matériau cristallin liquide appliquée entre un premier substrat et un deuxième substrat, lesquels substrats sont munis de moyens d'orientation définissant un angle de torsion Ø pour les molécules du matériau cristallin liquide, des moyens pour le guidage de la lumière à partir de la source de lumière au premier substrat, le deuxième substrat étant muni de moyens pour la réflexion de la lumière passant par la couche en un matériau cristallin liquide, ledit dispositif de projection comprenant en outre des moyens de polarisation disposés dans le trajet de lumière compris entre la source de lumière et le premier substrat et des moyens analyseurs disposés dans le trajet de lumière, après réflexion, entre le dispositif d'affichage à cristaux liquides et un plan d'affichage, **caractérisé en ce que** l'angle de torsion Ø présente une valeur comprise entre 30 et 55 degrés, et le dispositif d'affichage à cristaux liquides est muni d'une feuille de retardement.

2. Dispositif de projection selon la revendication 1, **caractérisé en ce que** l'angle compris entre la direction d'orientation des molécules cristallines liquides d'un côté des moyens de polarisation et la direction de polarisation définie par les moyens de polarisation est située dans l'une des gammes (- 15° - + 15 °) ou (75° - 105°).

3. Dispositif de projection selon la revendication 1 ou 2, **caractérisé en ce que** la feuille de retardement présente un axe optique dans un plan parallèle par rapport au premier substrat et l'angle γ compris entre l'axe optique de la feuille de retardement et la direction d'orientation des moyens d'orientation dans la région du premier substrat présente une valeur d'au moins (80 + Ø/2) degrés et d'au maximum (100+Ø) degrés.

4. Dispositif de projection selon la revendication 3, **caractérisé en ce que** l'angle γ est pratiquement égal à (90 + Ø/2) degrés.

5. Dispositif de projection selon la revendication 3, **caractérisé en ce que** l'angle γ est pratiquement égal à (90 + Ø) degrés.

6. Dispositif de projection selon la revendication 1 ou 3, **caractérisé en ce que** la feuille de retardement présente une valeur de retardement de 20 à 100 nanomètres.

7. Dispositif de projection selon la revendication 1 ou 3, **caractérisé en ce que** l'angle compris entre la direction d'orientation des molécules cristallines liquides sur le côté des moyens de polarisation et la direction de polarisation définie par les moyens de polarisation est situé dans l'une des gammes de (- 20° - + 30 °) ou (60° - 100°).

8. Dispositif de projection selon la revendication 7, **caractérisé en ce que** la feuille de retardement présente une valeur de retardement de 150 à 250 nanomètres.
